# FASCICULE DE BREVET EUROPEEN

(11) **EP 4 491 518 B1**
(45) Date de publication et mention de la délivrance du brevet: **25.02.2026**
(21) Numéro de dépôt: 24181952.3
(22) Date de dépôt: 13.06.2024
(51) Int. Cl.: B64D 27/12, B64D 27/18, B64D 27/40

(54) **ENSEMBLE PROPULSEUR D'AÉRONEF COMPRENANT UNE BIELLE PRINCIPALE D'ATTACHE MOTEUR, AINSI QUE DEUX BIELLES DE SÉCURITÉ EN PARALLÈLE, RELIÉES À UN RENFORT TRANSVERSAL AVANT D'UNE STRUCTURE PRIMAIRE D'UN MÂT**
FLUGZEUGTRIEBWERKANORDNUNG MIT EINER HAUPTSTANGE ZUR MOTORBEFESTIGUNG, SOWIE ZWEI PARALLEL AN EINER QUERVERSTÄRKUNG VOR EINER PRIMÄRSTRUKTUR EINES MASTS
AIRCRAFT PROPULSION ASSEMBLY COMPRISING A MAIN CONNECTING ROD FOR ENGINE ATTACHMENT, AND TWO PARALLEL SAFETY CONNECTING RODS CONNECTED TO A FRONT CROSS-MEMBER OF A PRIMARY STRUCTURE OF A MAST

(30) Priorité: 10.07.2023 FR 2307334
(43) Date de publication de la demande: 15.01.2025
(73) Titulaire: AIRBUS OPERATIONS (S.A.S.), 31060 Toulouse (FR)
(72) Inventeur: BERJOT, Michael, 31060 TOULOUSE (FR); LANSIAUX, Rémi, 31060 TOULOUSE (FR); VIGNES, Jean-Baptiste, 31060 TOULOUSE (FR)
(74) Mandataire: Airbus-OPS SAS

(56) Documents cités:
- US-A- 4 065 077
- US-A1- 2002 104 924
- US-A1- 2003 025 033
- US-A1- 2023 028 982
- US-A1- 2023 072 158
- US-B1- 11 440 635
- US-B2- 11 332 255

## Description

### DOMAINE TECHNIQUE

La présente demande se rapporte à un ensemble propulseur d'aéronef comprenant une attache moteur avant comprenant une bielle principale, ainsi que deux bielles de sécurité disposées en parallèle de ladite bielle principale, reliées à un renfort transversal avant d'une structure primaire d'un mât et à un moteur d'aéronef. La présente invention se rapporte également à un aéronef comprenant au moins un tel ensemble propulseur.

### ÉTAT DE LA TECHNIQUE ANTÉRIEURE

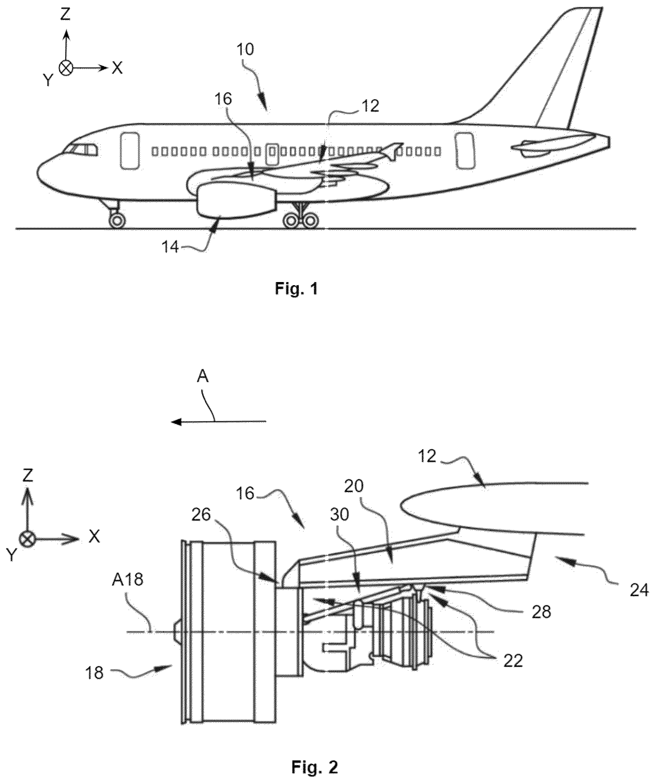

Selon un mode de réalisation visible sur les figures 1 et 2, un aéronef 10 comporte des ailes 12, et au moins un ensemble propulseur 14 positionné sous chacune des ailes 12. L'ensemble propulseur 14 comporte un mât 16 fixé sous l'aile 12 et un moteur 18 fixé sous le mât 16. Plus précisément, le mât 16 comprend une structure primaire 20 qui est reliée au moteur 18 par une attache moteur 22 et à l'aile 12 par une attache voilure 24.

Par convention, on appelle X la direction longitudinale du mât 16, cette direction X étant parallèle à l'axe de rotation A18 du moteur 18 et à un axe longitudinal de l'aéronef 10. D'autre part, on appelle Y la direction transversale du mât 16 qui est horizontale lorsque l'aéronef 10 est au sol et perpendiculaire à l'axe de rotation A18 du moteur 18, et Z la direction verticale ou hauteur verticale lorsque l'aéronef 10 est au sol et perpendiculaire à l'axe de rotation A18 du moteur 18, ces trois directions X, Y et Z étant orthogonales entre elles.

D'autre part, les termes "avant" et "arrière" sont à considérer par rapport à une direction d'avancement de l'aéronef 10 lors du fonctionnement du moteur 18 (sens d'écoulement des gaz, l'avant correspondant à l'admission des gaz (air) dans le moteur et l'arrière correspondant à l'échappement des gaz (gaz de combustion)), cette direction étant représentée schématiquement par la flèche A. Les termes "bâbord" et "tribord" sont également à considérer par rapport à la direction d'avancement A de l'aéronef 10 et par rapport à la direction longitudinale X.

L'attache moteur 22 comprend une attache moteur avant 26, une attache moteur arrière 28 et un couple de bielles de poussée 30 assurant la reprise des efforts de poussée.

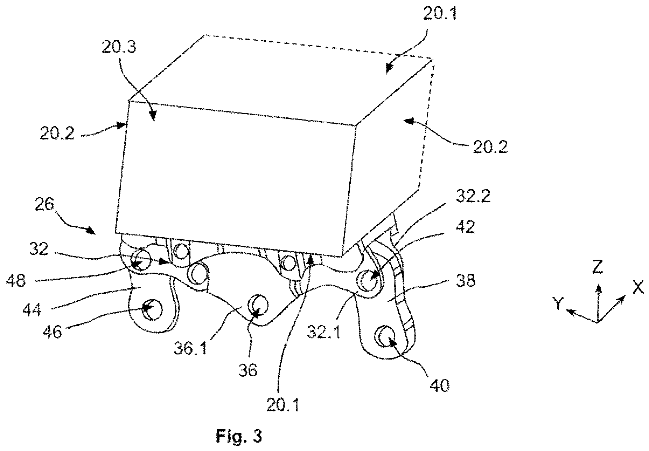

Selon une configuration visible sur la figure 3, la structure primaire 20 du mât 16 comprend des longerons supérieur et inférieur 20.1, des panneaux latéraux droit et gauche 20.2 ainsi qu'une pluralité de renforts transversaux 20.3 reliant les longerons supérieur et inférieur 20.1 ainsi que les panneaux latéraux droit et gauche 20.2. Un renfort transversal avant 20.3 est positionné à l'avant de la structure primaire 20 du mât, et s'étend au moins en partie sur le longeron inférieur 20.1. Ce renfort transversal avant 20.3 présente une surface d'appui pour fixer l'attache moteur avant 26, positionnée dans un plan horizontal, sous ledit renfort transversal avant.

L'attache moteur avant 26 comprend:
- une poutre transversale 32 positionnée sous la structure primaire 20, sous le renfort avant, et reliée à la structure primaire 20 par des éléments de liaison (non visibles sur la figure 3) verticaux et au moteur 18 par un axe de liaison de sécurité 36,
- une première bielle 38 reliée au moteur 18 par un premier axe de liaison moteur 40 et à la poutre transversale 32 par un premier axe de liaison poutre 42,
- une deuxième bielle 44 reliée au moteur 16 par un deuxième axe de liaison moteur 46 et à la poutre transversale 32 par un deuxième axe de liaison poutre 48.

Pour chaque axe de liaison poutre 42, 48, la poutre transversale 32 comprend une chape présentant deux ailes 32.1, 32.2 entre lesquelles est positionnée la première ou deuxième bielle 38, 44.

Pour chaque axe de liaison moteur 40, 46, le carter moteur (non représenté sur la figure 3) comprend une chape présentant deux ailes entre lesquelles est positionnée la première ou deuxième bielle 38, 44.

Pour l'axe de liaison de sécurité 36, la poutre transversale 32 comprend une chape présentant une aile 36.1, qui est positionnée entre deux ailes d'une chape (non visible sur la figure 3) du carter moteur.

Une telle attache moteur avant 26 présente une interface dite "fail safe" dissociée des chemins d'efforts primaires. En particulier, les bielles 38, 44 correspondent aux chemins d'efforts primaires, et permettent, en configuration nominale, d'assurer la reprise des efforts, tandis que l'axe de liaison de sécurité 36 correspond à un chemin d'effort en attente, dit de sécurité, et permet, en configuration dégradée d'une des bielles 38, 44, ou d'une des chapes 32.1, 32.2 de la poutre transversale 32, ou d'une des chapes du carter moteur, d'assurer la reprise des efforts.

Avec une telle attache moteur avant 26, il est donc nécessaire de provisionner une chape en attente sur le carter moteur et sur l'attache moteur avant (l'axe de liaison de sécurité 36). Toutefois, l'intégration de ces interfaces en attente complexifie le design du carter moteur, ainsi que celui des attaches moteur avant.

De plus, la distribution des efforts peut être fortement modifiée entre les configurations nominale et dégradée de l'attache moteur avant, ce qui peut rendre le dimensionnement des pièces complexe.

Le document US2023/028982 divulgue un assemblage entre un pylône d'aéronef et une turbomachine selon l'art antérieur, comportant un support avant configuré pour relier la zone avant de la turbomachine à la zone avant du pylône. Le support avant comporte des chapes de suspension reliées au carter intermédiaire de la turbomachine et au pylône, ainsi que des biellettes formant des liaisons articulées avec les chapes de suspension. Les biellettes sont insérées dans les chapes de suspension et sont traversées par des axes qui relient les biellettes aux chapes de suspension de la turbomachine et qui relient les biellettes aux chapes de suspension du pylône.

Le document US2003/025033 divulgue un dispositif d'accrochage d'un moteur sur un mât d'aéronef, comprenant deux ferrures assemblées l'une à l'autre et fixées au mât et deux paires de bielles interposées entre les deux ferrures et une partie de la structure du moteur de l'aéronef. Avec ce dispositif d'accrochage de l'art antérieur, l'intégrité de la liaison entre le mât et le moteur est préservée en cas de rupture de l'une quelconque des pièces du dispositif, sans qu'il soit nécessaire de prévoir un système d'accrochage de secours.

Le document US2023/072158 divulgue un système d'attache moteur avant selon l'art antérieur comportant un mât réacteur comportant une nervure frontale fixée contre une face avant, une attache moteur avant comportant une poutre fixée à l'avant de la nervure frontale, une première bielle fixée de manière articulée à la poutre par deux premiers points de liaison et une deuxième bielle fixée de manière articulée à la poutre par un deuxième point de liaison, et un carter avant du moteur. La première bielle est fixée de manière articulée au carter avant par un troisième point de liaison et la deuxième bielle est fixée de manière articulée au carter avant par un cinquième point de liaison. Chaque point de liaison d'une bielle à la poutre est positionné à l'intérieur d'un volume qui prolonge vers l'avant la face avant du mât réacteur, de sorte que le système d'attache moteur avant présente un encombrement réduit et une traînée moindre.

Il existe donc un besoin d'une attache moteur avant présentant une interface dite "fail safe", qui permet de limiter les interfaces en attente et de mieux maîtriser les chemins d'efforts dans la structure.

### EXPOSÉ DE L'INVENTION

La présente invention a pour objet un ensemble propulseur d'aéronef comprenant une structure primaire d'un mât, un moteur, et une attache moteur avant reliant la structure primaire et le moteur, la structure primaire comportant des longerons supérieur et inférieur, des panneaux latéraux droit et gauche ainsi qu'un renfort transversal avant, le renfort transversal avant comportant, pour chaque panneau latéral droit et gauche, une première chape en saillie par rapport audit panneau latéral, et présentant deux premières ailes, chaque première aile présentant un premier alésage, le moteur comportant au moins une deuxième chape présentant deux deuxièmes ailes, chaque deuxième aile présentant un deuxième alésage.

Selon l'invention, l'attache moteur avant comporte:
- une première bielle présentant des troisième et quatrième alésages, et étant positionnée entre les premières ailes de la première chape du renfort transversal avant et entre les deuxièmes ailes de la deuxième chape du moteur,
- des deuxième et troisième bielles de sécurité présentant chacune des cinquième et sixième alésages, la première chape du renfort transversal avant et la deuxième chape du moteur étant positionnées entre les deuxième et troisième bielles de sécurité,
- un premier axe de liaison renfort inséré dans les premier, troisième et cinquième alésages, et
- un premier axe de liaison moteur inséré dans les deuxième, quatrième et sixième alésages.

L'ensemble propulseur selon l'invention permet de minimiser le nombre d'interfaces en attente, en supprimant les chapes en attente sur le carter moteur et sur l'attache moteur avant, et donc de simplifier le design du carter moteur et de l'attache moteur avant. Cet ensemble propulseur permet également de conserver la répartition des efforts entre la configuration nominale et la configuration dégradée de l'attache moteur avant, ce qui simplifie le dimensionnement des pièces. Notamment, la présence des bielles de sécurité permet d'assurer la continuité du passage des efforts dans toutes les conditions.

Selon une autre caractéristique, le moteur comporte une troisième chape présentant deux troisièmes ailes, chaque troisième aile présentant un septième alésage, les deuxième et troisième bielles de sécurité étant positionnées entre les troisièmes ailes de la troisième chape du moteur.

Avantageusement, la présence de la troisième chape du moteur permet d'assurer la continuité du passage des efforts dans toutes les conditions (nominale ou dégradée de la deuxième chape du moteur).

Selon une autre caractéristique, les deuxième et troisième bielles de sécurité sont séparées de la troisième chape du moteur par un premier jeu.

Avantageusement, ce premier jeu permet de couvrir les tolérances de fabrication, ainsi que les déplacements dus à l'articulation de la jonction entre le renfort transversal avant et le moteur, en situation dégradée. Ce jeu permet également une rotation de la troisième chape du moteur par rapport aux deuxième et troisième bielles.

Selon l'invention, le premier axe de liaison moteur est inséré dans les sixième alésages des deuxième et troisième bielles de sécurité avec un deuxième jeu. Ce deuxième jeu permet d'avoir les deuxième et troisième bielles de sécurité en attente.

Selon une autre caractéristique, les deuxième et troisième bielles de sécurité sont séparées de la deuxième chape du moteur par un troisième jeu.

Avantageusement, ce troisième jeu permet de couvrir les tolérances de fabrication, ainsi que les déplacements dus à l'articulation de la jonction entre le renfort transversal avant et le moteur, en situation nominale. Ce jeu permet également une rotation de la deuxième chape du moteur par rapport à la première bielle.

Selon une autre caractéristique, l'attache moteur avant comprend, pour chaque première aile de la première chape du renfort transversal avant, une bague de renfort agencée dans le premier alésage.

Selon une autre caractéristique, le premier axe de liaison renfort présente un huitième alésage, et l'ensemble propulseur comporte un deuxième axe de liaison renfort de sécurité inséré dans le huitième alésage du premier axe de liaison renfort.

Avantageusement, la présence d'un double axe de liaison renfort permet d'assurer la continuité du passage des efforts dans toutes les conditions (nominale ou dégradée du premier axe de liaison renfort).

Selon une autre caractéristique, le premier axe de liaison moteur présente un neuvième alésage, et l'ensemble propulseur comporte un deuxième axe de liaison moteur de sécurité inséré dans le neuvième alésage du premier axe de liaison moteur.

Avantageusement, la présence d'un double axe de liaison moteur permet d'assurer la continuité du passage des efforts dans toutes les conditions (nominale ou dégradée du premier axe de liaison moteur).

La présente invention a également pour objet un aéronef comprenant au moins un ensemble propulseur selon l'invention.

### BRÈVE DESCRIPTION DES DESSINS

D'autres caractéristiques et avantages ressortiront de la description de l'invention qui va suivre, description donnée à titre d'exemple uniquement, en regard des dessins annexés parmi lesquels :
La Fig. 1 est une vue latérale d'un aéronef,
La Fig. 2 est une vue latérale d'un ensemble propulseur d'aéronef sans nacelle,
La Fig. 3 est une vue en perspective d'une attache moteur avant illustrant un mode de réalisation de l'art antérieur,
La Fig. 4 est une vue en perspective d'une attache moteur avant illustrant un mode de réalisation de l'invention,
La Fig. 5 est une vue de face d'une attache moteur avant illustrant un mode de réalisation de l'invention,
La Fig. 6 est un une vue en perspective d'une coupe d'une attache moteur avant illustrant un mode de réalisation de l'invention,
La Fig. 7 est un une vue en coupe d'une attache moteur avant illustrant un mode de réalisation de l'invention, et
La Fig. 8 est un une vue en coupe d'une attache moteur avant illustrant un autre mode de réalisation de l'invention.

### EXPOSÉ DÉTAILLÉ DE MODES DE RÉALISATION

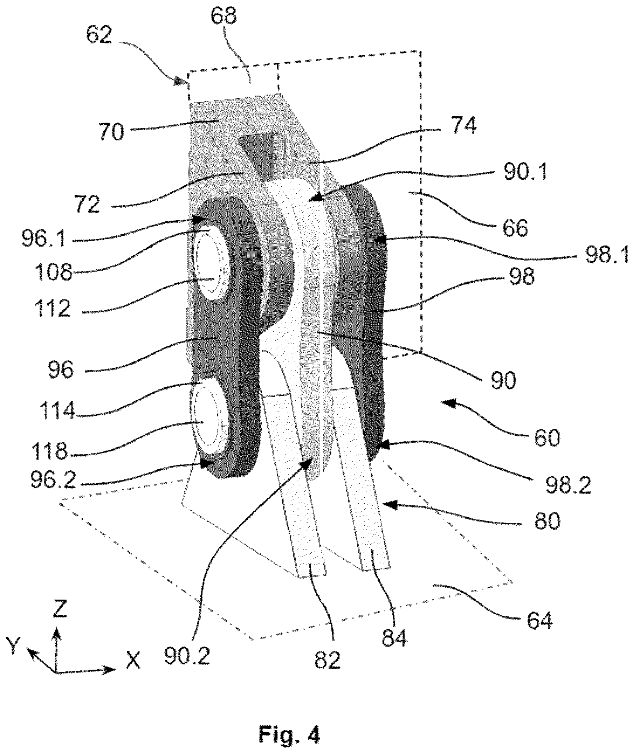

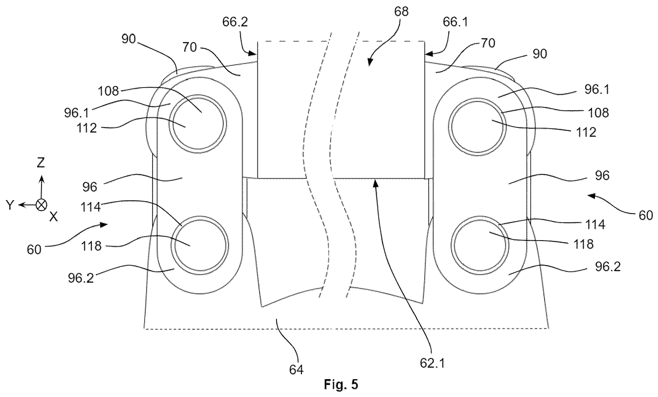

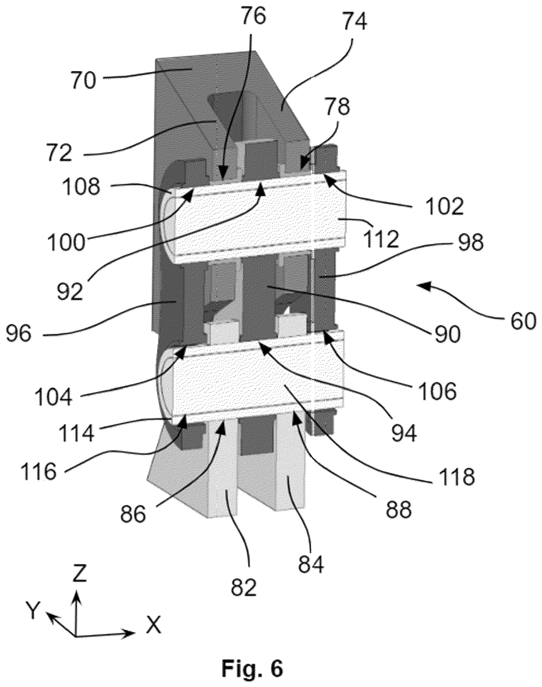

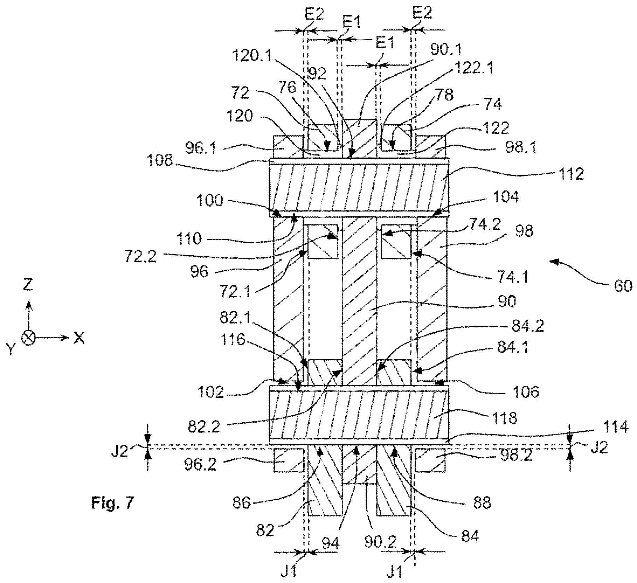

Sur les figures 4 à 7, on a représenté une attache moteur avant 60 d'un ensemble propulseur reliant une structure primaire 62 d'un mât d'aéronef et un moteur 64. Sur ces figures, seule une partie du carter du moteur 64 et de la structure primaire 62 sont représentées. Au moins un ensemble propulseur d'un aéronef est équipé d'une telle attache moteur avant 60.

La structure primaire 62 comporte un longeron supérieur (non représenté sur les figures 4 à 7) et un longeron inférieur 62.1, un panneau latéral droit 66.1 et un panneau latéral gauche 66.2, ainsi qu'un renfort transversal avant 68. Les panneaux latéraux droit et gauche 66.1, 66.2 s'étendent dans des plans parallèles au plan X-Z. Le renfort transversal avant 68 s'étend dans un plan parallèle au plan Y-Z. Le renfort transversal avant 68 comporte, pour chaque panneau latéral droit et gauche 66.1, 66.2, une chape 70 femelle en saillie par rapport audit panneau latéral droit ou gauche 66.1, 66.2. Ainsi, la chape 70 s'étend selon un plan parallèle au plan Y-Z, et donc transversalement aux panneaux latéraux droit et gauche 66.1, 66.2. La chape 70 présente deux ailes 72, 74, qui présentent chacune un alésage 76, 78 dont l'axe est parallèle à la direction longitudinale X.

Le moteur 64 comporte au moins une chape 80 femelle, en saillie en direction de la structure primaire 62, et qui présente deux ailes 82, 84. La chape 80 s'étend selon un plan parallèle au plan Y-Z. Chaque aile 82, 84 présente un alésage 86, 88 dont l'axe est parallèle à la direction longitudinale X.

L'attache moteur avant 60 comporte une bielle 90, dite principale ou centrale, qui s'étend dans un plan parallèle au plan Y-Z, et qui présente un premier alésage 92 à sa première extrémité 90.1 et un deuxième alésage 94 à sa deuxième extrémité 90.2. Les alésages 92, 94 s'étendent selon un axe parallèle à la direction longitudinale X. La première extrémité 90.1 de la bielle 90 principale est positionnée entre les ailes 72, 74 de la chape 70 du renfort transversal avant 68 et la deuxième extrémité 90.2 de la bielle 90 principale est positionnée entre les ailes 82, 84 de la chape 80 du moteur 64. La chape 70 du renfort transversal avant 68 et la chape 80 du moteur 64 sont donc sensiblement alignées, de manière ce que les ailes 72, 74 de la chape 70 et les ailes 82, 84 de la chape 80 sont disposées de part et d'autre de la bielle 90 principale.

L'attache moteur avant 60 comporte également deux bielles 96, 98, dite de sécurité ou latérale. Chaque bielle 96, 98 de sécurité s'étend dans un plan parallèle au plan Y-Z, et présente un premier alésage 100, 102 à sa première extrémité 96.1, 98.1 et un deuxième alésage 104, 106 à sa deuxième extrémité 96.2, 98.2. Les alésages 100, 102, 104, 106 s'étendent selon un axe parallèle à la direction longitudinale X. La chape 70, et notamment les ailes 72, 74, du renfort transversal avant 68 est positionnée entre la première extrémité 96.1 de la bielle 96 de sécurité et la première extrémité 98.1 de la bielle 98 de sécurité. La chape 80, et notamment les ailes 82, 84, du moteur 64 est positionnée entre la deuxième extrémité 96.2 de la bielle 96 de sécurité et la deuxième extrémité 98.2 de la bielle 98 de sécurité. Autrement dit, les bielles 96, 98 de sécurité sont disposées de part et d'autre de la chape 70 du renfort transversal avant 68 et de la chape 80 du moteur 64. Ainsi, la chape 70 du renfort transversal avant 68 est positionnée entre les premières extrémités 96.1, 98.1 des bielles 96, 98 de sécurité, et la chape 80 du moteur 64 est positionnée entre les deuxièmes extrémités 96.2, 98.2 des bielles 96, 98 de sécurité.

Les bielles de sécurité 96, 98 et la bielle 90 principale sont donc disposées en parallèle l'une par rapport à l'autre, la bielle 90 principale étant disposée entre les bielles de sécurité 96, 98. La bielle 90 principale présente des dimensions longitudinale (selon la direction longitudinale X), transversale (selon la direction transversale Y) et verticale (selon la direction verticale Z) supérieures aux dimensions longitudinale, transversale et verticale des bielles 96, 98 de sécurité. Les bielles 96, 98 de sécurité sont sensiblement identiques.

L'attache moteur avant 60 comporte un premier axe de liaison renfort 108, dit principal, qui présente un alésage 110 dont l'axe est parallèle à la direction longitudinale X. Le premier axe de liaison renfort 108 s'étend selon un axe parallèle à la direction longitudinale X. Le premier axe de liaison renfort 108 est agencé dans l'alésage 100 de la bielle 96 de sécurité, dans l'alésage 76 de l'aile 72 de la chape 70 du renfort transversal avant 68, dans l'alésage 92 de la bielle 90 principale, dans l'alésage 78 de l'aile 74 de la chape 70, et dans l'alésage 104 de la bielle 98 de sécurité. Les alésages 100, 76, 92, 78, 104 sont coaxiaux. Ainsi, le premier axe de liaison renfort 108 permet de relier l'attache moteur avant 60 au renfort transversal avant 68. L'attache moteur avant 60 comporte un deuxième axe de liaison renfort 112 de sécurité agencé dans l'alésage 110 du premier axe de liaison renfort 108. Ainsi, le premier axe de liaison renfort 108 et le deuxième axe de liaison renfort 112 de sécurité forment un double axe de liaison renfort entre le renfort transversal avant 68 et l'attache moteur avant 60. Le deuxième axe de liaison renfort 112 de sécurité permet d'assurer la continuité du passage des efforts dans toutes les conditions, même en cas de situation dégradée du premier axe de liaison renfort 108.

Le diamètre externe (dimension radiale à la direction longitudinale X) du deuxième axe de liaison renfort 112 de sécurité est sensiblement égal au diamètre de l'alésage 110 du premier axe de liaison renfort 108, de manière à ce que l'axe de liaison renfort 112 de sécurité soit inséré en force dans l'alésage 110 de l'axe de liaison renfort 108 principal.

Le diamètre externe du premier axe de liaison renfort 108 est sensiblement égal au diamètre de l'alésage 100, 104 de la bielle 96, 98 de sécurité, ainsi qu'au diamètre de l'alésage 92 de la bielle 90 principale. Une rotation de la bielle 90 principale ou des bielle 96, 98 de sécurité autour du premier axe de liaison renfort 108 est autorisée. La bielle 90 principale et les bielles 96, 98 de sécurité sont montées sur le premier axe de liaison renfort 108 avec un ajustement serré.

L'attache moteur avant 60 comporte, pour chaque aile 72, 74 de la chape 70 du renfort transversal avant 68, une bague de renfort 120, 122 comprenant un corps creux au moins partiellement positionné dans l'alésage 76, 78 de ladite aile 72, 74. Le diamètre externe du corps de la bague de renfort 120, 122 est sensiblement égal au diamètre de l'alésage 76, 78 de l'aile 72, 74 de la chape 70 du renfort transversal avant 68, de manière à ce que la bague de renfort 120, 122 soit insérée en force dans l'alésage 76, 78 de l'aile 72, 74 de la chape 70. Le diamètre externe du premier axe de liaison renfort 108 est sensiblement égal au diamètre interne du corps de la bague de renfort 120, 122.

L'attache moteur avant 60 comporte un premier axe de liaison moteur 114, dit principal, qui présente un alésage 116 dont l'axe est parallèle à la direction longitudinale X. Le premier axe de liaison moteur 114 s'étend selon un axe parallèle à la direction longitudinale X. Le premier axe de liaison moteur 114 est agencé dans l'alésage 102 de la bielle 96 de sécurité, dans l'alésage 86 de l'aile 82 de la chape 80 du moteur 64, dans l'alésage 94 de la bielle 90 principale, dans l'alésage 88 de l'aile 84 de la chape 80, et dans l'alésage 106 de la bielle 98 de sécurité. Les alésages 102, 86, 94, 88, 106 sont coaxiaux. Ainsi, le premier axe de liaison moteur 114 permet de relier l'attache moteur avant 60 au moteur 64.

L'attache moteur avant 60 comporte un deuxième axe de liaison moteur 118 de sécurité agencé dans l'alésage 116 du premier axe de liaison moteur 114. Ainsi, le premier axe de liaison moteur 114 et le deuxième axe de liaison moteur 118 de sécurité forment un double axe de liaison renfort entre le renfort transversal avant 68 et l'attache moteur avant 60. Le deuxième axe de liaison moteur 118 de sécurité permet d'assurer la continuité du passage des efforts dans toutes les conditions, même en cas de situation dégradée pour le premier axe de liaison moteur 114.

Le diamètre externe du deuxième axe de liaison moteur 118 de sécurité est sensiblement égal au diamètre de l'alésage 116 du premier axe de liaison moteur 114, de manière à ce que l'axe de liaison moteur 118 de sécurité soit inséré en force dans l'alésage 116 de l'axe de liaison moteur 114 principal.

Ainsi, la bielle 90 principale est reliée au moteur 64 par le premier axe de liaison moteur 114 et au renfort transversal avant 68 par le premier axe de liaison renfort 108, la bielle 90 principale étant positionnée entre les ailes 72, 74 de la chape 70 du renfort transversal avant 68 et entre les ailes 82, 84 de la chape 80 du moteur 64. Les bielles 96, 98 de sécurité sont reliées au moteur 64 par le premier axe de liaison moteur 114 et au renfort transversal avant 68 par le premier axe de liaison renfort 108, la chape 70 du renfort transversal avant 68 et la chape 80 du moteur 64 étant positionnées entre les bielles 96, 98 de sécurité.

Les faces extérieures 72.1, 74.1 de la chape 70, c'est-à-dire la face extérieure 72.1 de l'aile 72 et la face extérieure 74.1 de l'aile 74 (par opposition aux faces intérieures 72.2, 74.2 des ailes 72, 74 qui sont en regard l'une de l'autre), sont sensiblement alignées, selon la direction longitudinale X, avec les faces extérieures 82.1, 84.1 de la chape 80, c'est-à-dire la face extérieure 82.1 de l'aile 82 et la face extérieure 84.1 de l'aile 84 (par opposition aux faces intérieures 82.2, 84.2 des ailes 82, 84 qui sont en regard l'une de l'autre). La dimension longitudinale des ailes 72, 74 de la chape 70 du renfort transversal avant 68 est inférieure à la dimension longitudinale des ailes 82, 84 de la chape 80 du moteur 64. Ainsi, la distance selon la direction longitudinale X entre les ailes 72, 74 de la chape 70 (distance entre les faces intérieures 72.2, 74.2) est supérieure à la distance entre les ailes 82, 84 de la chape 80 (distance entre les faces intérieures 82.2, 84.2).

Au niveau de la deuxième extrémité 90.2 de la bielle 90 principale, aucun jeu ne résulte entre la bielle 90 principale et les ailes 82, 84 de la chape 80 du moteur 64. Autrement dit, la dimension longitudinale de la bielle 90 principale est sensiblement égale à la distance selon la direction longitudinale X entre les ailes 82, 84 de la chape 80 (distance entre les faces intérieures 82.2, 84.2).

Au niveau de la première extrémité 90.1 de la bielle 90 principale, un espace E1 est présent entre la bielle 90 principale et chaque face intérieure 72.2, 74.2 de l'aile 72, 74 de la chape 70 du renfort transversal avant 68. La bague de renfort 120, 122 comporte une excroissance radiale 120.1, 122.1, de diamètre supérieur au diamètre externe du corps de la bague de renfort 120, 122, qui s'étend depuis le corps de la bague de renfort 120, 122 entre la bielle 90 principale et les ailes 72, 74 de la chape 70. La dimension longitudinale de l'excroissance radiale 120.1, 122.1 est sensiblement égale à l'espace E1. Ainsi, l'espace E1 entre la bielle 90 principale et la chape 70 est comblé par l'excroissance radiale 120.1, 122.1 de la bague de renfort 120, 122.

Pour chaque bielle 96, 98 de sécurité, au niveau de la première extrémité 96.1, 98.1 de la bielle 96, 98 de sécurité, un espace E2 est présent entre la bielle 96, 98 de sécurité et la face extérieure 72.1, 74.1 de l'aile 72, 74 de la chape 70 du renfort transversal avant 68. Le corps de la bague de renfort 120, 122 s'étend au-delà de l'alésage 76, 78 en direction de la bielle 96, 98 de sécurité, et notamment dans l'espace E2. Ainsi, l'espace E2 entre la bielle 96, 98 de sécurité et la chape 70 est comblé par le corps de la bague de renfort 120, 122.

Pour chaque bielle 96, 98 de sécurité, au niveau de la deuxième extrémité 96.2, 98.2 de la bielle 96, 98 de sécurité, un jeu J1 est présent entre la bielle 96, 98 de sécurité et la face extérieure 82.1, 84.1 de l'aile 82, 84 de la chape 80 du moteur 64. Le jeu J1 est configuré pour permettre de couvrir les tolérances de fabrication, ainsi que les déplacements dus à l'articulation de la jonction entre le renfort transversal avant 68 et le moteur 64, en situation nominale. Le jeu J1 est configuré pour être être le plus faible possible afin de minimiser la flexion des ailes 82, 84 de la chape 80. Le jeu J1 permet avantageusement une rotation de la chape 80 du moteur 64 par rapport à la bielle 90 principale.

La bielle 90 principale est montée sur le premier axe de liaison moteur 114 avec un ajustement serré. Pour chaque bielle 96, 98 de sécurité, au niveau de la deuxième extrémité 96.2, 98.2 de la bielle 96, 98 de sécurité, un jeu J2 est présent entre l'alésage 102, 106 de la bielle 96, 98 de sécurité et le premier axe de liaison moteur 114. Autrement dit, le premier axe de liaison moteur 114 est inséré dans les alésages 102, 106 des bielles 96, 98 de sécurité avec un jeu J2. Le jeu J2 est configuré pour être comblé en cas de configuration dégradée. Autrement dit, les bielles 96, 98 de sécurité sont montées sur le premier axe de liaison renfort 108 avec un ajustement serré et sur le premier axe de liaison moteur 114 avec le jeu J2. En cas de défaillance, la ou les bielle(s) 96, 98 de sécurité ou le premier axe de liaison moteur 114 se déplace pour amener la paroi de l'alésage 100, 104 de la bielle 96, 98 de sécurité contre le premier axe de liaison moteur 114.

En configuration nominale, les efforts sont transmis de la chape 80 du moteur 64 à la bielle 90 principale, puis à la chape 70 du renfort transversal avant 68. En configuration nominale, les bielles 96, 98 de sécurité sont "en attente", et ne permettent pas la reprise des efforts. En effet, les bielles 96, 98 de sécurité sont séparées du premier axe de liaison moteur 114 par le jeu J2 qui n'est pas nul.

Dans une première configuration dégradée, où la bielle 90 principale est défaillante, les efforts vont être transmis de la chape 80 du moteur 64 aux bielles 96, 98 de sécurité, puis à la chape 70 du renfort transversal avant 68. Le jeu J2, présent en configuration nominale, entre les bielles 96, 98 de sécurité et le premier axe de liaison moteur 114 est comblé dans cette configuration dégradée. En effet, la bielle 90 principale étant défaillante, cette dernière ne permet plus d'assurer la transmission des efforts en direction du renfort transversal avant 68. Le moteur 64, qui était maintenu au renfort transversal avant 68 au moyen de la chape 80 du moteur 64, de la bielle 90 principale et de la chape 70 du renfort transversal avant 68 en configuration nominale, va désormais être maintenu au renfort transversal avant 68 au moyen de la chape 80 du moteur 64, des bielles 96, 98 de sécurité et de la chape 70 du renfort transversal avant 68 dans cette configuration dégradée. Dans cette configuration dégradée, le premier axe de liaison moteur 114 repose alors dans l'alésage 102, 106 de la bielle 96, 98 de sécurité, de manière à ce que le jeu J2 entre le premier axe de liaison moteur 114 et les bielles 96, 98 de sécurité soit nul.

Dans une deuxième configuration dégradée, où une aile 82 de la chape 80 du moteur 64 est défaillante, les efforts sont transmis de l'aile 84 de la chape 80 du moteur 64 à la bielle 90 principale et à la bielle 98 de sécurité, puis à la chape 70 du renfort transversal avant 68. De même, dans cette configuration dégradée, le jeu J2 est nul.

Dans une troisième configuration dégradée, où une aile 72 de la chape 70 du renfort transversal avant 68 est défaillante, les efforts sont transmis de la chape 80 du moteur 64 à la bielle 90 principale et à la bielle 98 de sécurité, puis à l'aile 74 de la chape 70 du renfort transversal avant 68. De même, dans cette configuration dégradée, le jeu J2 est nul.

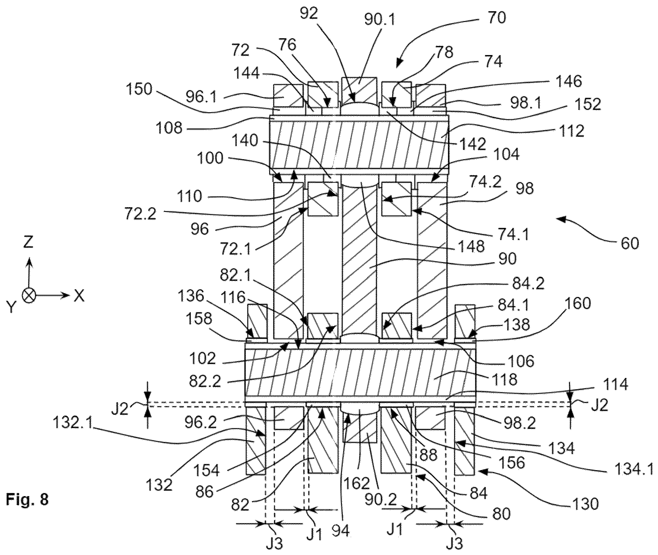

La figure 8 représente une attache moteur avant selon un autre mode de réalisation.

Selon ce mode de réalisation, le moteur comporte au moins la première chape 80 femelle, en saillie en direction de la structure primaire du mât, et qui présente deux ailes 82, 84, et une deuxième chape 130 femelle, en saillie en direction de la structure primaire du mât, et qui présente deux ailes 132, 134. Les chapes 80, 130 s'étendent selon un plan parallèle au plan Y-Z. Les chapes 80, 130 sont disposées en parallèle l'une de l'autre. Chaque aile 82, 84, 132, 134 présente un alésage 86, 88, 136, 138 dont l'axe est parallèle à la direction longitudinale X. La chape 80 est disposée entre les ailes 132, 134 de la chape 130. Les alésages 86, 88, 136, 138 sont coaxiaux.

La chape 130, et notamment les ailes 132, 134, du moteur est positionnée autour de la deuxième extrémité 96.2 de la bielle 96 de sécurité et la deuxième extrémité 98.2 de la bielle 98 de sécurité. Autrement dit, les bielles 96, 98 de sécurité sont disposées entre les ailes 132, 134 de la chape 130 du moteur, et autour de la chape 80. Ainsi, la chape 70 du renfort transversal avant est positionnée entre les premières extrémités 96.1, 98.1 des bielles 96, 98 de sécurité, tandis que les deuxièmes extrémités 96.2, 98.2 des bielles 96, 98 de sécurité sont disposées entre l'aile 132 de la chape 130 et l'aile 82 de la chape 80 pour la première bielle 96 de sécurité, et entre l'aile 134 de la chape 130 et l'aile 84 de la chape 80 pour la deuxième bielle 98 de sécurité.

Selon ce mode de réalisation, l'attache moteur avant 60 comporte, pour chaque aile 72, 74 de la chape 70 du renfort transversal avant, une première demie-bague de renfort 140, 142 comprenant un corps creux au moins partiellement positionné dans l'alésage 76, 78 de ladite aile 72, 74, à partir de la face intérieure 72.2, 74.2 de l'aile 72, 74, et une deuxième demie-bague de renfort 144, 146 comprenant un corps creux au moins partiellement positionné dans l'alésage 76, 78 de ladite aile 72, 74, à partir de la face extérieure 72.1, 74.1 de l'aile 72, 74. Les première et deuxième demies-bagues de renfort 140, 142, 144, 146 forment ainsi une bague de renfort pour chaque alésage 76, 78 de l'aile 72, 74. Le diamètre externe du corps de chaque demie-bague de renfort 140, 142, 144, 146 est sensiblement égal au diamètre de l'alésage 76, 78 de l'aile 72, 74 de la chape 70 du renfort transversal avant 68, de manière à ce que chaque demie-bague de renfort 140, 142, 144, 146 soit insérée en force dans l'alésage 76, 78 de l'aile 72, 74 de la chape 70.. Le diamètre externe du premier axe de liaison renfort 108 est sensiblement égal au diamètre interne du corps de chaque demie-bague de renfort 140, 142, 144, 146.

Selon ce mode de réalisation, l'attache moteur avant 60 comporte, pour la bielle 90 principale, une bague de renfort 148 positionnée dans l'alésage 92 de ladite bielle 90 principale. La dimension externe de la bague de renfort 148 est sensiblement égale à la dimension de l'alésage 92 de la bielle 90 principale, de manière à ce que la bague de renfort 148 soit insérée en force dans l'alésage 92 de la bielle 90 principale. Le diamètre externe du premier axe de liaison renfort 108 est sensiblement égal au diamètre interne de la bague de renfort 148.

Selon ce mode de réalisation, l'attache moteur avant 60 comporte, pour chaque bielle 96, 98 de sécurité, une bague de renfort 150, 152 positionnée dans l'alésage 100, 104 de ladite bielle 96, 98 de sécurité. Le diamètre externe de la bague de renfort 150, 152 est sensiblement égal au diamètre de l'alésage 100, 104 de la bielle 96, 98 de sécurité, de manière à ce que la bague de renfort 150, 152 soit insérée en force dans l'alésage 100, 104 de la bielle 96, 98 de sécurité. Le diamètre externe du premier axe de liaison renfort 108 est sensiblement égal au diamètre interne de la bague de renfort 150, 152.

La bague de renfort 150 s'étend au-delà de l'alésage 100 de la bielle 96 de sécurité, selon la direction longitudinale X (ici en direction de l'aile 72 de la chape 70), et la demie-bague de renfort 144 s'étend au-delà de l'alésage 76 de l'aile 72 de la chape 70, dans une direction opposée à la direction longitudinale X (ici en direction de la bielle 96 de sécurité). La bague de renfort 150 et la demie-bague de renfort 144 sont en butée l'une contre l'autre, tandis qu'un espace résulte entre la bielle 96 de sécurité et l'aile 72 de la chape 70.

La bague de renfort 148 s'étend au-delà de l'alésage 92 de la bielle 90 principale, de part et d'autre de l'alésage 92. La demie-bague de renfort 140 s'étend au-delà de l'alésage 76 de l'aile 72 de la chape 70 selon la direction longitudinale X, et la demie-bague de renfort 142 s'étend au-delà de l'alésage 78 de l'aile 74 de la chape 70, dans une direction opposée à la direction longitudinale X. La bague de renfort 148 et la demie-bague de renfort 140, 142 sont en butée l'une contre l'autre, tandis qu'un espace résulte entre la bielle 90 principale et l'aile 72, 74 de la chape 70.

La bague de renfort 152 s'étend au-delà de l'alésage 104 de la bielle 98 de sécurité, dans une direction opposée à la direction longitudinale X (ici en direction de l'aile 74 de la chape 70), et la demie-bague de renfort 146 s'étend au-delà de l'alésage 78 de l'aile 74 de la chape 70, selon la direction longitudinale X (ici en direction de la bielle 98 de sécurité). La bague de renfort 152 et la demie-bague de renfort 146 sont en butée l'une contre l'autre, tandis qu'un espace résulte entre la bielle 98 de sécurité et l'aile 74 de la chape 70.

Selon ce mode de réalisation, l'attache moteur avant 60 comporte, pour chaque aile 82, 84, 132, 134 de la chape 80, 130 du moteur, une bague de renfort 154, 156, 158, 160 positionnée dans l'alésage 86, 88, 136, 138 de ladite aile 82, 84, 132, 134. Le diamètre externe de la bague de renfort 154, 156, 158, 160 est sensiblement égal au diamètre de l'alésage 86, 88, 136, 138 de l'aile 72, 74 de la chape 70 du renfort transversal avant 68, de manière à ce que la bague de renfort 154, 156, 158, 160 soit insérée en force dans l'alésage 86, 88, 136, 138 de l'aile 72, 74 de la chape 70. Le diamètre externe du premier axe de liaison renfort 108 est sensiblement égal au diamètre interne de la bague de renfort 154, 156, 158, 160.

Selon ce mode de réalisation, l'attache moteur avant 60 comporte, pour la bielle 90 principale, une bague de renfort 162 positionnée dans l'alésage 94 de ladite bielle 90 principale. La dimension externe de la bague de renfort 162 est sensiblement égale à la dimension de l'alésage 94 de la bielle 90 principale, de manière à ce que la bague de renfort 162 soit insérée en force dans l'alésage 94 de la bielle 90 principale. Le diamètre externe du premier axe de liaison renfort 108 est sensiblement égal au diamètre interne de la bague de renfort 162.

La bague de renfort 162 s'étend au-delà de l'alésage 94 de la bielle 90 principale, de part et d'autre de l'alésage 94. La bague de renfort 154 s'étend au-delà de l'alésage 86 de l'aile 82 de la chape 80 selon la direction longitudinale X, et la bague de renfort 156 s'étend au-delà de l'alésage 88 de l'aile 84 de la chape 80, dans une direction opposée à la direction longitudinale X. La bague de renfort 162 et la bague de renfort 154, 156 sont en butée l'une contre l'autre, tandis qu'un espace résulte entre la bielle 90 principale et l'aile 82, 84 de la chape 80.

Selon ce mode de réalisation, les faces extérieures 72.1, 74.1 de la chape 70 sont sensiblement alignées, selon la direction longitudinale X, avec les faces extérieures 82.1, 84.1 de la chape 80; et les faces intérieures 72.2, 74.2 de la chape 70 sont sensiblement alignées, selon la direction longitudinale X, avec les faces intérieures 82.2, 84.2 de la chape 80. La dimension longitudinale des ailes 72, 74 de la chape 70 du renfort transversal avant est sensiblement égale à la dimension longitudinale des ailes 82, 84 de la chape 80 du moteur. Ainsi, la distance selon la direction longitudinale X entre les ailes 72, 74 de la chape 70 est sensiblement égale à la distance entre les ailes 82, 84 de la chape 80.

Pour chaque bielle 96, 98 de sécurité, au niveau de la deuxième extrémité 96.2, 98.2 de la bielle 96, 98 de sécurité, un jeu J3 est présent entre la bielle 96, 98 de sécurité et la face intérieure 132.1, 134.1 de l'aile 132, 134 de la chape 130 du moteur 64. Le jeu J3 est configuré pour permettre de couvrir les tolérances de fabrication, ainsi que les déplacements dus à l'articulation de la jonction entre le renfort transversal avant 68 et le moteur 64, en situation dégradée. Le jeu J3 est configuré pour être le plus faible possible afin de minimiser la flexion des ailes 132, 134 de la chape 130. Le jeu J3 permet avantageusement une rotation de la chape 130 du moteur 64 par rapport à la bielle 96, 98 de sécurité.

Selon ce mode de réalisation, le premier axe de liaison moteur 114 est agencé dans l'alésage 136 de l'aile 132 de la chape 130, dans l'alésage 102 de la bielle 96 de sécurité, dans l'alésage 86 de l'aile 82 de la chape 80 du moteur 64, dans l'alésage 94 de la bielle 90 principale, dans l'alésage 88 de l'aile 84 de la chape 80, dans l'alésage 106 de la bielle 98 de sécurité, et dans l'alésage 138 de l'aile 134 de la chape 130.

Selon ce mode de réalisation, en configuration nominale, les efforts sont transmis de la chape 80 du moteur à la bielle 90 principale, puis à la chape 70 du renfort transversal avant. En configuration nominale, les bielles 96, 98 de sécurité sont "en attente", et ne permettent pas la reprise des efforts; et la chape 130 est "en attente", et ne permet pas la reprise des efforts. Selon ce mode de réalisation, dans une première configuration dégradée, où la bielle 90 principale est défaillante, les efforts vont être transmis des chapes 80, 130 du moteur aux bielles 96, 98 de sécurité, puis à la chape 70 du renfort transversal avant.

Selon ce mode de réalisation, dans une deuxième configuration dégradée, où une aile 82 de la chape 80 du moteur est défaillante, les efforts sont transmis de l'aile 84 de la chape 80 et de l'aile 134 de la chape 130 du moteur à la bielle 90 principale et à la bielle 98 de sécurité, puis à la chape 70 du renfort transversal avant.

Selon ce mode de réalisation, dans une troisième configuration dégradée, où une aile 72 de la chape 70 du renfort transversal avant est défaillante, les efforts sont transmis de la chape 80 et de l'aile 134 de la chape 130 du moteur à la bielle 90 principale et à la bielle 98 de sécurité, puis à l'aile 74 de la chape 70 du renfort transversal avant.

Quel que soit le mode de réalisation, une attache moteur avant selon l'invention présente un nombre minimal d'interfaces de sécurité / en attente. En outre, la répartition des efforts dans cette attache moteur avant, entre une configuration nominale et une configuration dégradée d'une telle attache moteur avant, est conservée.

## Revendications

1. Ensemble propulseur d'aéronef comprenant une structure primaire (62) d'un mât, un moteur (64), et une attache moteur avant (60) reliant la structure primaire et le moteur,
la structure primaire (62) comportant des longerons supérieur et inférieur (62.1), des panneaux latéraux droit (66.1) et gauche (66.2) ainsi qu'un renfort transversal avant (68), le renfort transversal avant (68) comportant, pour chaque panneau latéral droit (66.1) et gauche (66.2), une première chape (70) en saillie par rapport audit panneau latéral, et présentant deux premières ailes (72, 74), chaque première aile (72, 74) présentant un premier alésage (76, 78),
le moteur (64) comportant au moins une deuxième chape (80) présentant deux deuxièmes ailes (82, 84), chaque deuxième aile (82, 84) présentant un deuxième alésage (86, 88),
l'attache moteur avant (60) comportant:
- une première bielle (90) présentant des troisième et quatrième alésages (92, 94), et étant positionnée entre les premières ailes (72, 74) de la première chape (70) du renfort transversal avant (68) et entre les deuxièmes ailes (82, 84) de la deuxième chape (80) du moteur (64),
- un premier axe de liaison renfort (108) inséré dans les premier (76, 78) et troisième (92) alésages, et
- un premier axe de liaison moteur (114) inséré dans les deuxième (86, 88) et quatrième (94) alésages,
**caractérisé en ce que** l'attache moteur avant (60) comporte également:
- des deuxième et troisième bielles (96, 98) de sécurité présentant chacune des cinquième et sixième alésages (100, 102, 104, 106), la première chape (70) du renfort transversal avant (68) et la deuxième chape (80) du moteur (64) étant positionnées entre les deuxième et troisième bielles (96, 98) de sécurité,
**en ce que** le premier axe de liaison renfort (108) est inséré dans les cinquième alésages (100, 104) des deuxième et troisième bielles (96, 98) de sécurité,
et **en ce que** le premier axe de liaison moteur (114) est inséré dans les sixième alésages (102, 106) des deuxième et troisième bielles (96, 98) de sécurité avec un deuxième jeu (J2).

2. Ensemble propulseur selon la revendication 1, dans lequel le moteur (64) comporte également une troisième chape (130) de sécurité présentant deux troisièmes ailes (132, 134), chaque troisième aile (132, 134) présentant un septième alésage (136, 138), les deuxième et troisième bielles (96, 98) de sécurité étant positionnées entre les troisièmes ailes (132, 134) de la troisième chape (130) de sécurité du moteur (64).

3. Ensemble propulseur selon la revendication précédente, dans lequel les deuxième et troisième bielles (96, 98) de sécurité sont séparées de la troisième chape (130) de sécurité du moteur (64) par un premier jeu (J3).

4. Ensemble propulseur selon l'une des revendications précédentes, dans lequel les deuxième et troisième bielles (96, 98) de sécurité sont séparées de la deuxième chape (80) du moteur (64) par un troisième jeu (J1).

5. Ensemble propulseur selon l'une des revendications précédentes, dans lequel l'attache moteur avant (60) comprend, pour chaque première aile (72, 74) de la première chape (70) du renfort transversal avant (68), une bague de renfort (120, 122) agencée dans le premier alésage (92).

6. Ensemble propulseur selon l'une des revendications précédentes, dans lequel le premier axe de liaison renfort (108) présente un huitième alésage (110), et l'ensemble propulseur comporte un deuxième axe de liaison renfort (112) de sécurité inséré dans le huitième alésage (110) du premier axe de liaison renfort (108).

7. Ensemble propulseur selon l'une des revendications précédentes, dans lequel le premier axe de liaison moteur (114) présente un neuvième alésage (116), et l'ensemble propulseur comporte un deuxième axe de liaison moteur (118) de sécurité inséré dans le neuvième alésage (116) du premier axe de liaison moteur (114).

8. Aéronef (10) comprenant au moins un ensemble propulseur selon l'une des revendications précédentes.

## Patentansprüche

1. Antriebsanordnung eines Flugzeugs, umfassend eine Primärstruktur (62) eines Pylons, ein Triebwerk (64) und eine vordere Triebwerksbefestigung (60), die die Primärstruktur und das Triebwerk verbindet,
wobei die Primärstruktur (62) obere und untere Längsträger (62.1), rechte (66.1) und linke (66.2) Seitenpaneele sowie eine vordere Querverstärkung (68) umfasst, wobei die vordere Querverstärkung (68) für jedes rechte (66.1) und linke (66.2) Seitenpaneel einen ersten Gabelkopf (70) umfasst, der in Bezug auf das Seitenpaneel vorspringt und zwei erste Schenkel (72, 74) aufweist, wobei jeder erste Schenkel (72, 74) eine erste Bohrung (76, 78) aufweist,
wobei das Triebwerk (64) mindestens einen zweiten Gabelkopf (80) umfasst, der zwei Schenkel (82, 84) aufweist, wobei jeder zweite Schenkel (82, 84) eine zweite Bohrung (86, 88) aufweist,
wobei die vordere Triebwerksbefestigung (60) umfasst:
- einen ersten Lenker (90), der dritte und vierte Bohrungen (92, 94) aufweist und zwischen den ersten Schenkeln (72, 74) des ersten Gabelkopfes (70) der vorderen Querverstärkung (68) und zwischen den zweiten Schenkeln (82, 84) des zweiten Gabelkopfes (80) des Triebwerks (64) positioniert ist,
- eine erste Verstärkungsverbindungsachse (108), die in die ersten (76, 78) und dritten (92) Bohrungen eingeführt ist, und
- eine erste Triebwerksverbindungsachse (114), die in die zweiten (86, 88) und vierten (94) Bohrungen eingeführt ist,
**dadurch gekennzeichnet, dass** die vordere Triebwerksbefestigung (60) auch umfasst:
- zweite und dritte Sicherheitslenker (96, 98), die jeweils fünfte und sechste Bohrungen (100, 102, 104, 106) aufweisen, wobei der erste Gabelkopf (70) der vorderen Querverstärkung (68) und der zweite Gabelkopf (80) des Triebwerks (64) zwischen den zweiten und dritten Sicherheitslenkern (96, 98) positioniert sind;
dass die erste Verstärkungsverbindungsachse (108) in die fünften Bohrungen (100,104) des zweiten und dritten Sicherheitslenkers (96, 98) eingeführt sind,
und dass die erste Triebwerksverbindungsachse (114) in die sechsten Bohrungen (102,106) der zweiten und dritten Sicherheitslenker (96, 98) mit einem zweiten Spiel (J2) eingeführt ist.

2. Antriebsanordnung nach Anspruch 1, wobei das Triebwerk (64) auch einen dritten Sicherheitsgabelkopf (130) umfasst, der zwei dritte Schenkel (132, 134) aufweist, wobei jeder dritte Schenkel (132, 134) eine siebte Bohrung (136, 138) aufweist, wobei die zweiten und dritten Sicherheitslenker (96, 98) zwischen den dritten Schenkeln (132, 134) des dritten Sicherheitsgabelkopfes (130) des Triebwerks (64) positioniert sind.

3. Antriebsanordnung nach dem vorhergehenden Anspruch, wobei die zweiten und dritten Sicherheitslenker (96, 98) von dem dritten Sicherheitsgabelkopf (130) des Triebwerks (64) durch ein erstes Spiel (J3) getrennt sind.

4. Antriebsanordnung nach einem der vorhergehenden Ansprüche, wobei die zweiten und dritten Sicherheitslenker (96, 98) von dem zweiten Gabelkopf (80) des Triebwerks (64) durch ein drittes Spiel (J1) getrennt sind.

5. Antriebsanordnung nach einem der vorhergehenden Ansprüche, wobei die vordere Triebwerksbefestigung (60) für jeden ersten Schenkel (72, 74) des ersten Gabelkopfes (70) der vorderen Querverstärkung (68) einen Verstärkungsring (120, 122) umfasst, der in der ersten Bohrung (92) angeordnet ist.

6. Antriebsanordnung nach einem der vorhergehenden Ansprüche, wobei die erste Verstärkungsverbindungsachse (108) eine achte Bohrung (110) aufweist und die Antriebsanordnung eine zweite Sicherheitsverstärkungsverbindungsachse (112) umfasst, die in die achte Bohrung (110) der ersten Verstärkungsverbindungsachse (108) einführt ist.

7. Antriebsanordnung nach einem der vorhergehenden Ansprüche, wobei die erste Triebwerksverbindungsachse (114) eine neunte Bohrung (116) aufweist und die Antriebsanordnung eine zweite Sicherheitstriebwerksverbindungsachse (118) umfasst, die in die neunte Bohrung (116) der ersten Triebwerksverbindungsachse (114) einführt ist.

8. Flugzeug (10), das mindestens eine Antriebsanordnung nach einem der vorhergehenden Ansprüche umfasst.

## Claims

1. Aircraft propulsion assembly comprising a primary structure (62) of a pylon, an engine (64) and a front engine attachment (60) connecting the primary structure and the engine,
the primary structure (62) having upper and lower spars (62.1), right-hand (66.1) and left-hand (66.2) lateral panels and a front transverse reinforcement (68), the front transverse reinforcement (68) having, for each right-hand (66.1) and left-hand (66.2) lateral panel, a first clevis (70) protruding relative to said lateral panel and having two first flanges (72, 74), each first flange (72, 74) having a first bore (76, 78),
the engine (64) having at least one second clevis (80) having two second flanges (82, 84), each second flange (82, 84) having a second bore (86, 88),
the front engine attachment (60) having:
- a first rod (90) having third and fourth bores (92, 94) and being positioned between the first flanges (72, 74) of the first clevis (70) of the front transverse reinforcement (68) and between the second flanges (82, 84) of the second clevis (80) of the engine (64),
- a first reinforcement connection pin (108) inserted into the first (76, 78) and third (92) bores, and
- a first engine connection pin (114) inserted into the second (86, 88) and fourth (94) bores,
**characterized in that** the front engine attachment (60) also has:
- second and third safety rods (96, 98), each having fifth and sixth bores (100, 102, 104, 106), the first clevis (70) of the front transverse reinforcement (68) and the second clevis (80) of the engine (64) being positioned between the second and third safety rods (96, 98),
**in that** the first reinforcement connection pin (108) is inserted into the fifth bores (100, 104) of the second and third safety rods (96, 98),
and **in that** the first engine connection pin (114) is inserted into the sixth bores (102, 106) of the second and third safety rods (96, 98) with a second clearance (J2).

2. Propulsion assembly according to Claim 1, wherein the engine (64) also has a third safety clevis (130) having two third flanges (132, 134), each third flange (132, 134) having a seventh bore (136, 138), the second and third safety rods (96, 98) being positioned between the third flanges (132, 134) of the third safety clevis (130) of the engine (64).

3. Propulsion assembly according to the preceding claim, wherein the second and third safety rods (96, 98) are separated from the third safety clevis (130) of the engine (64) by a first clearance (J3).

4. Propulsion assembly according to one of the preceding claims, wherein the second and third safety rods (96, 98) are separated from the second clevis (80) of the engine (64) by a third clearance (J1).

5. Propulsion assembly according to one of the preceding claims, wherein the front engine attachment (60) comprises, for each first flange (72, 74) of the first clevis (70) of the front transverse reinforcement (68), a reinforcing ring (120, 122) arranged in the first bore (92).

6. Propulsion assembly according to one of the preceding claims, wherein the first reinforcement connection pin (108) has an eighth bore (110) and the propulsion assembly has a second safety reinforcement connection pin (112) inserted into the eighth bore (110) of the first reinforcement connection pin (108).

7. Propulsion assembly according to one of the preceding claims, wherein the first engine connection pin (114) has a ninth bore (116) and the propulsion assembly has a second safety engine connection pin (118) inserted into the ninth bore (116) of the first engine connection pin (114).

8. Aircraft (10) comprising at least one propulsion assembly according to one of the preceding claims.
